# EUROPÄISCHE PATENTANMELDUNG

(11) **EP 2 479 180 A1**
(43) Veröffentlichungstag der Anmeldung: **25.07.2012**
(21) Anmeldenummer: 11151170.5
(22) Anmeldetag: 17.01.2011
(51) Int. Cl.: C07F 9/11, C07F 9/09

(54) **Verfahren zur Herstellung von Alkylphosphaten**

(71) Anmelder: LANXESS Deutschland GmbH, 51369 Leverkusen (DE)
(72) Erfinder: Dr. Hansel, Jan-Gerd, 51469 Bergisch-Gladbach (DE)

(57) **Zusammenfassung**

Die vorliegende Erfindung betrifft ein Verfahren zur Herstellung von Tetraalkylbisphosphaten durch Umsetzung von Tetrachlorbisphosphaten mit Alkoholen, Neutralisation des gebildeten Chlorwasserstoffs mit einer Base und Abtrennung des bei der Neutralisation gebildeten Salzes von der Reaktionsmischung als konzentrierte wässrige Lösung.

## Beschreibung

Die vorliegende Erfindung betrifft ein Verfahren zur Herstellung von Tetraalkylbisphosphaten durch Umsetzung von Tetrachlorbisphosphaten mit Alkoholen, Neutralisation des gebildeten Chlorwasserstoffs mit einer Base und Abtrennung des bei der Neutralisation gebildeten Salzes von der Reaktionsmischung als konzentrierte wässrige Lösung.

Tetraalkylbisphosphate sind viskose, niedrigflüchtige Flüssigkeiten und finden seit langer Zeit technische Anwendungen, beispielsweise als Polymeradditive (siehe US 2,782,128) oder als Hydrauliköle (siehe US 4,056,480). Für diese Anwendungen ist es typischer Weise erforderlich, dass die Tetraalkylbisphosphate möglichst wenig Verunreinigungen enthalten. So sollte der Gehalt an sauren Verunreinigungen, wie er beispielsweise durch die Bestimmung der Säurezahl ermittelt werden kann, möglichst niedrig sein, da Säure zu beschleunigter Zersetzung oder Korrosion führen kann. Tetraalkylbisphosphate mit einer Säurezahl von größer als etwa 1,0 mg KOH/g sind für die genannten Anwendungen unbrauchbar. Ähnlich wie Säuren sind auch Verunreinigungen mit Basen unerwünscht, da sie bei der Anwendung in unerwünschter Weise als Katalysatoren fungieren können. Weiterhin ist der Gehalt an Elektrolyten unerwünscht, weil er ebenfalls Korrosionsprobleme verursachen kann oder zu Unverträglichkeit zwischen Tetraalkylbisphosphat und einer Polymermatrix führen kann. Gehalte an Metallionen von größer als etwa 5000 ppm, wie sie durch bekannte chromatographische oder spektroskopische Methoden ermittelt werden können, sind unerwünscht.

Verschiedene Verfahren zur Herstellung von Tetraalkylbisphosphaten sind bekannt. Sie weisen jedoch Mängel auf, indem die Vermeidung oder Abtrennung der oben genannten Verunreinigungen aufwändig und umständlich und so für eine großtechnische Produktion ungeeignet sind. Weiterhin liefern die bekannten Verfahren unbefriedigende Ausbeuten, was eine technisch aufwändige Abtrennung und Entsorgung von unverbrauchten Rohstoffen oder von Nebenprodukten erforderlich macht.

US 2,782,128 beschreibt ein Verfahren zur Herstellung von Tetraalkylbisphosphaten durch Umsetzung von Dialkylchlorphosphaten mit Diolen in Gegenwart von Pyridin. Das in der ersten Stufe der Synthesesequenz aus Phoshphortrichlorid, Alkohol und Chlor hergestellte Zwischenprodukt Dialkylchlorphosphat muss mit dem Lösungsmittel Benzol aufgearbeitet und dann im Vakuum destilliert werden. In der zweiten Stufe muss das Nebenprodukt Pyridinhydrochlorid durch Zugabe des Lösungsmittels Diethylether ausgefällt werden. Weiterhin müssen Reste des Pyridins mittels Salzsäure extrahiert werden und die Produktphase dann wieder mit Natronlauge säurefrei und mit Wasser neutral gewaschen werden. Schließlich ist die destillative Entfernuung des Lösungsmittels und von Wasserresten erforderlich. Die Gesamtausbeute über beide Stufen wird mit 74 - 77 % angegeben. Nachteilig an diesem Verfahren ist die Vielzahl der erforderlichen Aufarbeitungsoperationen, die mehrfache Verwendung von Lösungsmitteln sowie die nur mäßige Ausbeute.

Die Publikation "Diphosphate Ester Plasticizers" in Indust. Eng. Chem 1950, Band 42, S. 488, beschreibt ein ähnliches Verfahren wie US 2,782,128 und gibt als Nachteile dieses Verfahrens an, dass die Ausbeute mit nur 50 % sehr niedrig sei und dass erhebliche Schwierigkeiten bei der Reinigung der Zwischenprodukte und des Endproduktes aufgetreten seien. Als Alternative wird ein besseres Verfahren beschrieben, in dem ein Diol in der ersten Stufe mit Phosphoroxychlorid zu einem Tetrachlorbisphosphat umgesetzt wird, welches dann in der zweiten Stufe mit dem Alkohol zum Endprodukt reagiert. Es wird erwähnt, dass die Ausbeuten zufriedenstellend seien, allerdings werden sie nicht angegeben. Zur Aufarbeitung des Reaktionsansatzes der zweiten Stufe wird Pyridin zugegeben, das ausgefallene Pyridinhydrochlorid abgesaugt und die Produktphase dann mit Wasser gewaschen. Schließlich müssen Pyridinreste im Vakuum entfernt werden.

Nachteilig an dieser Vorgehensweise ist zunächst die Schwierigkeit, die Pyridinreste vollständig aus dem Endprodukt zu entfernen. Die Abtrennung des Pyridinhydrochlorids vom Tetraalkylbisphosphat durch Filtration gelingt nur dann zufriedenstellend, wenn sich dieses im Tetraalkylbisphosphat nur wenig löst. Ein weiterer Nachteil ergibt sich aus der Tatsache, dass eine Wäsche der Produktphase mit Wasser durchgeführt wird. Ist das Tetraalkylbisphosphat teilweise mit Wasser mischbar, so sind Ausbeuteverluste bei dieser Operation unvermeidlich. Bei Tetraalkylbisphosphaten, die in jedem Verhältnis mit Wasser mischbar sind, versagt diese Wäsche vollständig, da eine Abtrennung des Produktes vom Abwasser durch Phasentrennung nicht möglich ist.

US 4,056,480 schlägt ein ähnliches Verfahren zur Herstellung von Tetraalkylbisphosphaten vor, bei dem ebenfalls ein Diol in der ersten Stufe mit Phosphoroxychlorid zu einem Tetrachlorbisphosphat umgesetzt wird, das in der zweiten Stufe mit dem Alkohol zum Endprodukt reagiert. Bei der Isolierung des Endprodukts wird anstelle von Pyridin eine verdünnte Natronlauge eingesetzt. Es bildet sich ein Gemisch, aus dem die flüssige Produktphase durch Phasentrennung abgetrennt werden kann. Nachdem aus der Produktphase der Alkoholüberschuss abdestilliert wurde, muss sie ein weiteres Mal mit Wasser gewaschen und schließlich im Vakuum von Wasserresten befreit werden. Die Aubeuten an Tetraalkylbisphosphaten betragen 12 - 74 %.

Nachteilig an diesem Verfahren sind wiederum die nur mäßige Ausbeute und der Umstand, dass das Verfahren mehrere Flüssig-flüssig-Phasentrennungen beinhaltet. Damit ist das Verfahren zur Herstellung von teilweise wasserlöslichen Tetraalkylbisphosphaten nur schlecht geeignet und zur Herstellung von vollständig wasserlöslichen Tetraalkylbisphosphaten gänzlich ungeeignet.

Es ist Aufgabe der vorliegenden Erfindung, ein Verfahren zur Herstellung von vollständig wasserlöslichen Tetraalkylbisphosphaten zur Verfügung zu stellen, das einfach durchführbar ist und gute Ausbeuten liefert.

Überraschend wurde gefunden, dass sich vollständig wasserlösliche Tetraalkylbisphosphate leicht und in guter Ausbeute herstellen lassen, wenn der bei der Umsetzung von Tetrachlorbisphosphaten mit Alkoholen gebildete Chlorwasserstoff mit einer Base neutralisiert wird und das bei der Neutralisation gebildete Salz als konzentrierte wässrige Lösung aus der Reaktionsmischung abgetrennt wird. Die genannte Aufgabe wird also gelöst durch ein Verfahren zur Herstellung von vollständig wasserlöslichen Tetraalkylbisphosphaten, dadurch gekennzeichnet, dass man
a) ein Tetrachlorbisphosphats mit einem oder mehreren Alkoholen umsetzt,
b) wenn in Schritt a) mindestens 50 % der im Tetrachlorbisphosphat enthaltenen P-Cl-Gruppen umgesetzt wurden die Reaktionsmischung aus Schritt a) mit einer Base enthaltend eine oder mehrere Substanzen der Formel (Katⁿ⁺)ₐ(X^{m-})_{b}, worin Katⁿ⁺ für ein Kation der Ladung n steht, X^{m-} für ein Anion der Ladung m steht, und a und b ganze Zahlen sind, die der Beziehung n × a = m × b genügen, umsetzt,
c) anschließend soviel Wasser zu der Reaktionsmischung aus Schritt b) zugibt, dass sich eine Mischung bestehend aus zwei getrennten, flüssige Phasen bildet und
d) die das Tetraalkylbisphosphat enthaltende Phase aus der in Schritt c) erhaltenen Mischung abtrennt.

In einer bevorzugten Ausführungsform besteht die in Schritt b) einzsetzende Base aus einer oder mehreren Substanzen der Formel (Katⁿ⁺)ₐ(X^{m-})_{b.} Der Begriff "Tetraalkylbisphosphate" bezeichnet organische Substanzen, die pro Molekül zwei Phosphorsäureestergruppen -O-P(=O)(OR)₂ enthalten, wobei R allgemein für Alkylreste steht und die in einem Molekül enthaltenen Alkylreste R gleich oder verschieden sein können. Der Begriff "vollständig wasserlöslich" bezeichnet im Zusammenhang mit der vorliegenden Erfindung solche Flüssigkeiten, die beim Mischen mit Wasser bei 25 °C unabhängig vom Verhältnis der Flüssigkeit zum Wasser eine homogene Lösung ohne Phasentrennung ergeben (siehe Beispiel 7). Der Begriff "Tetrachlorbisphosphate" bezeichnet organische Substanzen, die pro Molekül zwei Phosphorsäureesterdichloridgruppen -O-P(=O)Cl₂ enthalten.

Die im erfindungsgemäßen Verfahren eingesetzten Tetrachlorbisphosphate lassen sich nach bekannten Methoden herstellen, wie sie beispielsweise in Indust. Eng. Chem 1950, Band 42, S. 488 oder in US 4,056,480 beschrieben sind.

Die im erfindungsgemäßen Verfahren eingesetzten Tetrachlorbisphosphate entsprechen bevorzugt der allgemeinen Formel (I) 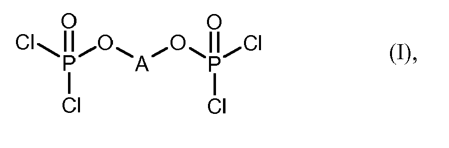 handelt, worin
- A: für einen geradkettigen, verzweigten und/oder cyclischen C₄- bis C₂₀-Alkylenrest, eine Gruppierung -CH₂-CH=CH-CH₂-, eine Gruppierung -CH₂-C≡C-CH₂-, eine Gruppierung -CHR⁵-CHR⁶-(O-CHR⁷-CHR⁸)ₐ-, worin a eine Zahl von 1 bis 5 ist, eine Gruppierung -CHR⁵-CHR⁶-S(O)_{b}-CHR⁷-CHR⁸-, worin b eine Zahl von 0 bis 2 ist, oder eine Gruppierung -(CHR⁵-CHR⁶)_{c}-O-R⁹-O-(CHR⁷-CHR⁸)_{d}-, worin c und d unabhängig voneinander Zahlen von 1 bis 5 sind, steht,
- R⁵, R⁶, R⁷, R⁸: unabhängig voneinander für H oder Methyl stehen,
- R⁹: für eine Gruppierung -CH₂-CH=CH-CH₂-, eine Gruppierung -CH₂-C≡=C-CH₂-, einen 1,2-Phenylenrest, einen 1,3-Phenylenrest, einen 1,4-Phenylenrest, einen Rest der allgemeinen Formel (II), 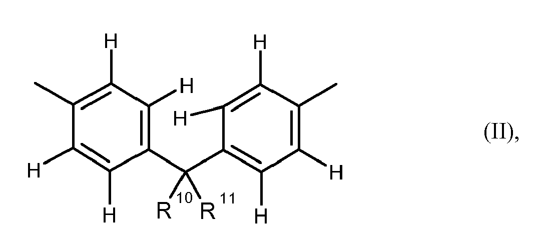 einen Rest der allgemeinen Formel (III), 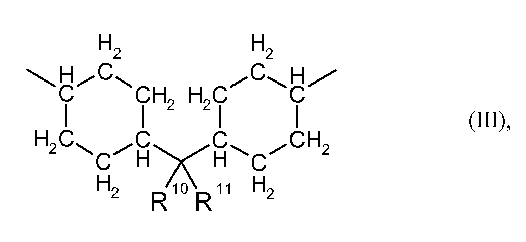 einen Rest der allgemeinen Formel (IV), 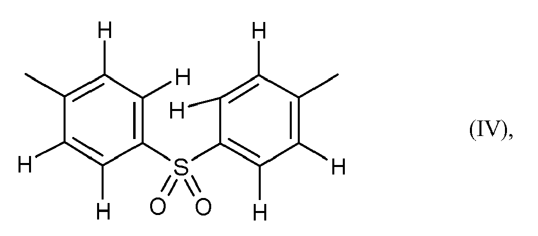 oder für einen Rest der Formel -C(=O)-R¹²-C(=O)- steht,
R¹⁰ und R¹¹ unabhängig voneinander für H oder C₁- bis C₄-Alkyl stehen oder R¹⁰ und R¹¹ zusammen einen optional alkylsubstituierten Ring mit 4 bis 8 C-Atomen bilden und
R¹² für einen geradkettigen, verzweigten und/oder cyclischen C₂- bis C₈-Alkylenrest, einen 1,2-Phenylenrest, einen 1,3-Phenylenrest, oder einen 1,4-Phenylenrest steht.

Bevorzugt ist A ein geradkettiger C₄- bis C₆-Alkylenrest oder bevorzugt ist A eine Gruppierung der allgemeinen Formel (III), worin R¹⁰ und R¹¹ gleich sind und Methyl bedeuten, eine Gruppierung der Formeln (V), (VI) oder (VII), 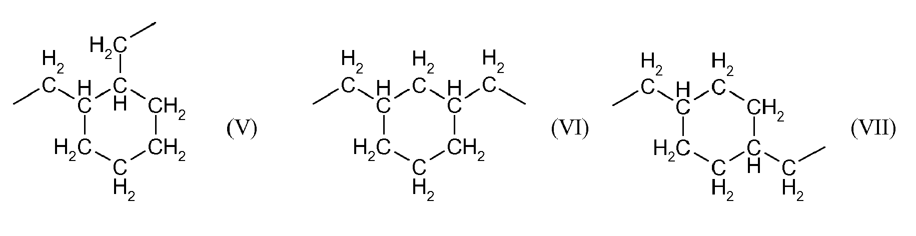 oder bevorzugt ist A eine Gruppierung -CHR⁵-CHR⁶-(O-CHR⁷-CHR⁸)ₐ-, worin a eine Zahl von 1 bis 2 ist und R⁵, R⁶, R⁷ und R⁸ gleich sind und H bedeuten oder eine Gruppierung -(CHR⁵-CHR⁶)_{c}-O-R⁹-O-(CHR⁷-CHR⁸)_{d}-, worin c und d unabhängig voneinander eine Zahl von 1 bis 2 sind, R⁹ eine Gruppierung der allgemeinen Formel (II) und R¹⁰ und R¹¹ gleich sind und Methyl bedeutet.

Besonders bevorzugt ist A ein Rest ausgewählt aus der Gruppe bestehend aus -CH₂CH₂-O-CH₂CH₂-, -CH₂CH₂CH₂CH₂- und -CH₂-CH(CH₂CH₂)₂CH-CH₂-.

Die im erfindungsgemäßen Verfahren eingesetzten Alkohole werden bevorzugt ausgewählt aus der Gruppe bestehend aus Methanol, Ethanol, 1-Propanol, 2-Propanol, 2-Methyl-1-propanol, 1-Butanol und 2-Butanol. Besonders bevorzugt werden Methanol und Ethanol eingesetzt.

Bei den im erfindungsgemäßen Verfahren eingesetzten Basen der Formel (Katⁿ⁺)ₐ(X^{m-})_{b} handelt es sich bevorzugt um Ammonium-, Alkalimetall oder Erdalkalimetallsalze. Diese Salze enthalten als Anion bevorzugt Hydroxid, Alkoholat, Oxid, Carbonat, Hydrogencarbonat, Phosphat, Hydrogenphosphat, Dihydrogenphosphat oder Acetat. Besonders bevorzugt sind Ammoniumhydroxid, Lithiumhydroxid, Natriumhydroxid, Natriummethanolat, Natriumethanolat, Natriumcarbonat, Natriumhydrogencarbonat, Trinatriumphosphat, Dinatriumhydrogenphosphat, Natriumacetat, Kaliumhydroxid, Kalium-tert-butylat, Kaliumcarbonat, Kaliumhydrogencarbonat, Cäsiumhydroxid, Magnesiumhydroxid, Magnesiumoxid, Calciumhydroxid, Calciummethanolat oder Calciumoxid. Insbesondere bevorzugt werden Natriumhydroxid, Natriumcarbonat, Natriumhydrogencarbonat, Kaliumhydroxid, Kaliumcarbonat oder Kaliumhydrogencarbonat eingesetzt.

Bei der Durchführung des Schrittes a) des erfindungsgemäßen Verfahrens werden mindestens 4 mol-Äquivalente Alkohol pro 1 mol-Äquivalent Tetrachlorbisphosphat eingesetzt. Die Reaktanden können in Substanz oder in einem Lösungsmittel gelöst miteinander umgesetzt werden. Geeignete Lösungsmittel sind Toluol, Heptan und Dichlormethan sowie der in die Reaktion eingesetzte Alkohol im Überschuss. Das Tetrachlorbisphosphat wird in einem Reaktionsgefäß vorgelegt und der Alkohol wird zudosiert. Alternativ legt man den Alkohol in einem Reaktionsgefäß vor und dosiert das Tetrachlorbisphosphat zu. Es ist auch möglich, Alkohol und Tetrachlorbisphosphat parallel in ein Reaktionsgefäß zu dosieren. Anstelle der reinen Reaktanden können auch Lösungen der Reaktanden dosiert werden.

In der dann ablaufenden Umsetzung werden die P-Cl-Gruppen des Tetrachlorbisphosphats durch Reaktion mit dem Alkohol in P-OR-Gruppen überführt und es wird Chlorwasserstoff freigesetzt. Die Umsetzung wird bevorzugt bei Temperaturen zwischen -10 °C und +70 °C und bei Drücken zwischen 10 und 6000 mbar durchgeführt. Dabei werden die Reaktanden durch geeignete Maßnahmen miteinander in Kontakt gebracht, insbesondere durch Rühren.

Bevorzugt wird der in der Reaktion als Nebenprodukt gebildete Chlorwasserstoff im Wesentlichen in der Reaktionsmischung belassen und in Schritt b) des Verfahrens mit der Base neutralisiert. In einer alternativen, ebenfalls bevorzugten Ausführungsform des Verfahrens wird in Schritt a) der als Nebenprodukt gebildete Chlorwasserstoff zumindest teilweise aus dem Reaktionsgefäß ausgeschleust. Dazu wird beispielsweise Vakuum angelegt oder ein inertes Gas wie Stickstoff oder Kohlendioxid durch das Reaktionsgefäß geleitet.

In einer alternativen Ausführungsform kann der Schritt a) weitere, optionale Trennoperationen beinhalten, bevorzugt eine Destillation zur Abtrennung von nicht umgesetztem Alkohol.

Der nachfolgende Schritt b) wird erst dann durchgeführt, wenn in Schritt a) mindestens 50 % der im Tetrachlorbisphosphat enthaltenen P-Cl-Gruppen umgesetzt wurden. Der Umsatz der P-Cl-Gruppen kann analytisch verfolgt werden, bevorzugt mittels ³¹P-NMR-Spektroskopie.

Zur Durchführung des Schrittes b) wird die in Schritt a) erhaltene Reaktionsmischung bevorzugt unter Durchmischung in Kontakt mit der Base gebracht. Die Menge der Base wird bevorzugt so gewählt, dass die Reaktionsmischung nach dem Schritt b) einen pH-Wert zwischen 6 und 11 aufweist. Besonders bevorzugt weist die Reaktionsmischung nach dem Schritt b) einen pH-Wert zwischen 7 und 10 auf.

Bevorzugt wird die Base in einer dosierfähigen Form in das Reaktionsgefäß des Schrittes a) eingebracht. Alternativ und ebenfalls bevorzugt wird die Base in geeigneter Form in einem zweiten Reaktionsgefäß vorgelegt und die Reaktionsmischung aus Schritt a) in dieses überführt.

Bevorzugt geeignete, dosierfähige Formen der Base sind Pulver, Granulate, Lösungen oder Dispersionen. In einer besonders bevorzugten Ausführungsform des Verfahrens wird die Base in Form einer wässrigen Lösung oder Dispersion eingesetzt. Ganz besonders bevorzugt wird eine 10 - 60 Gew.-%ige, wässrige Lösung von Natriumhydroxid, Natriumcarbonat, Kaliumhydroxid und/oder Kaliumcarbonat eingesetzt.

In einer alternativen, ebenfalls bevorzugten Ausführungsform des Verfahrens wird die Base in Form eines Pulvers mit einer mittleren Teilchengröße von 0,1 µm bis 2000 µm eingesetzt. Besonders bevorzugt wird pulverförmiges Natriumcarbonat, Natriumhydrogencarbonat, Kaliumcarbonat und/oder Kaliumhydrogencarbonat eingesetzt.

Der Schritt b) wird bevorzugt bei Temperaturen zwischen 5 °C und 70 °C und bei Drücken zwischen 10 und 6000 mbar durchgeführt.

Der Schritt b) kann weitere, optionale Trennoperationen beinhalten, bevorzugt eine Destillation zur Abtrennung von nicht umgesetztem Alkohol aus Schritt a).

Im Schritt c) des erfindungsgemäßen Verfahrens wird zu der in Schritt b) erhaltenen Reaktionsmischung Wasser zugesetzt und die erhaltene Mischung in geeigneter Weise durchmischt. Dadurch wird das Salz KatClₙ in eine wässrige Lösung überführt. Die Zugabe von Wasser kann auch in der Weise erfolgen, dass das Wasser bereits in Schritt b) in Form einer wässrigen Lösung oder Dispersion eingebracht wird. Der Schritt c) wird bevorzugt bei denselben Temperatur- und Druckbedingungen wie Schritt a) durchgeführt.

Die in Schritt b) erhaltenen Reaktionsmischung wird mit gerade soviel Wasser verdünnt, dass sich in der Reaktionsmischung spontan und ohne Zusatz eines weiteren Lösungsmittels mindestens zwei getrennte flüssige Phasen bilden und sich alle Feststoffe im Wesentlichen aufgelöst haben. Überraschend wurde nämlich gefunden, dass sich die Reaktionsmischung auch im Falle von wasserlöslichen Tetraalkylbisphosphaten in eine erste klare flüssige Phase, die überwiegend das Tetraalkylbisphosphat enthält, und in eine zweite klare flüssige Phase, die überwiegend eine wässrige Lösung darstellt, trennt, wenn sie eine geeignete Menge Wasser enthält. Die zum Erreichen der Phasentrennung geeignete Menge Wasser kann durch einfache Versuche leicht ermittlet werden (siehe Beispiele 2 und 3). Bevorzugt wird zwischen 25 und 50 mol Wasser bezogen auf ein mol Tetrachlorbisphosphat eingesetzt. Besonders bevorzugt werden zwischen 30 und 40 mol Wasser bezogen auf ein mol Tetrachlorbisphosphat eingesetzt.

Der Schritt c) wird bevorzugt bei Temperaturen zwischen 5 °C und 70 °C und bei Drücken zwischen 10 und 6000 mbar durchgeführt.

Der Schritt c) kann bevorzugt weitere, optionale Trennoperationen beinhalten, besonders bevorzugt eine Filtration zur Abtrennung von wasserunlöslichen Feststoffen oder eine Destillation zur Abtrennung von nicht umgesetztem Alkohol aus Schritt a).

Im Schritt d) des erfindungsgemäßen Verfahrens werden die beiden in Schritt c) erhaltenen Phasen getrennt und die das Tetraalkylbisphosphat enthaltende Phase wird nach an sich bekannten Methoden aufgearbeitet.

Zur Abtrennung der Produktphase werden die an sich bekannten Methoden zur Trennung von Flüssig-flüssig-Mischungen angewendet, bevorzugt das Dekantieren oder das Zentrifugieren. Die abgetrennte Produktphase kann einer weiteren Phasentrennung oder mehreren Phasentrennungen unterworfen werden und wenn erforderlich einer Nachreinigung, bevorzugt durch Filtration, Klärung, Extraktion, Destillation oder Trocknung, oder durch eine geeignete Kombination dieser Methoden, zugeführt werden.

Das erfindungsgemäße Verfahren wird bevorzugt für die Herstellung von vollständig wasserlöslichen Tetraalkylbisphosphaten eingesetzt. Es bietet jedoch auch bei nur teilweise oder nicht wasserlöslichen Tetraalkylbisphosphaten Vorteile.

Jeder einzelne der vier Schritte des Verfahrens kann diskontinuierlich oder kontinuierlich durchgeführt werden. Das gesamte Verfahren kann aus beliebigen Kombinationen von diskontinuierlich oder kontinuierlich durchgefiihrten Schritten bestehen.

Das erfindungsgemäße Verfahren gestattet die Synthese von ganz oder teilweise wasserlöslichen Tetraalkylbisphosphaten in besserer Ausbeute als nach den aus dem Stand der Technik bekannten Verfahren und in hoher Reinheit. Es unterscheidet sich von den bekannten Verfahren wesentlich dadurch, dass in der Aufarbeitung kein Lösungsmittel außer Wasser eingesetzt wird. Überraschend ist, dass sich die wasserlöslichen Tetraalkylbisphosphate von der wässrigen, die salzartigen Nebenpordukte enthaltenden Phase durch eine Flüssig-flüssig-Trennung abtrennen lassen und dass die Abtrennung der salzartigen Nebenpordukte so vollständig gelingt, dass das Endprodukt nur einen sehr niedrigen Salzgehalt aufweist.

Anhand der nachfolgenden Beispiele wird die Erfindung näher erläutert, ohne dass dadurch eine Einschränkung der Erfindung bewirkt werden soll. Die angegebenen Teile beziehen sich auf das Gewicht.

Zur Klarstellung sei angemerkt, dass vom Rahmen der vorliegenden Erfindung alle vorstehend aufgeführten, allgemeinen oder in Vorzugsbereichen genannten Definitionen und Parameter in beliebigen Kombinationen umfasst sind.

### Beispiele

### Beispiel 1 Herstellung von Diethylenglycol-bis(dichlorphosphat) (nicht erfindungsgemäß)

In einem 1000-ml-Vierhalskolben mit Rührer, Thermometer, Tropftrichter mit Druckausgleich und Rückflusskühler wurden 984,3 g Phosphorylchlorid bei 20 °C vorgelegt. Dann wurde ein Vakuum von etwa 670 mbar angelegt und innerhalb von 4 h wurden 332,3 g Diethylenglykol zugetropft. Durch Kühlung im Eiswasserbad wurde die Temperatur bei 20 °C gehalten. Es bildete sich eine klare, farblose Reaktionsmischung. Nach beendeter Dosierung wurde der Druck bis auf etwa 6 mbar abgesenkt und 16 h bei 25 °C nachgerührt. Danach verblieben 1055,7 g (98 %) Diethylenglycolbis(dichlorphosphat).

### Beispiel 2 Herstellung von Tetraethyldiethylenglycolbisphosphat (erfindungsgemäß)

In einem 1000-ml-Vierhalskolben mit Rührer, Thermometer, Tropftrichter mit Druckausgleich und Rückflusskühler wurden unter Stickstoffatmosphäre 390 ml Ethanol bei 20 °C vorgelegt. Bei dieser Temperatur wurden innerhalb von 50 min 186,9 g Diethylenglycol-bis(dichlorphosphat) aus Beispiel 1 zugetropft. Durch Außenkühlung wurde die Temperatur bei 20 °C gehalten. Die Reaktionsmischung wurde 4 h bei 20 °C nachgerührt. Dann wurde in die farblose und klare Syntheselösung innerhalb von 70 min 163,7 g 50%ige Natronlauge getropft. Die Temperatur wurde durch Kühlung im Eiswasserbad bei 20 °C gehalten. Die Mischung hatte pH 8,5 und wurde 16 h bei 23 °C gerührt und dann mittels einer Vigreux-Kolonne bei 60 °C und 135 mbar von nicht umgesetztem Ethanol befreit. Die verbleibende Suspension wurde mit 100 ml Wasser verdünnt. Die Suspension enthielt wie zuvor reichlich Feststoff und war für eine Flüssig-flüssig-Trennung ungeeignet. Es wurden weitere 100 ml Wasser zugegeben und verrührt, wodurch sich der Feststoffgehalt etwas verringerte. Es wurde weiter Wasser in kleinen Portionen zugegeben, bis schließlich nach der Zugabe von insgesamt 340 ml Wasser der Feststoff vollständig aufgelöst war und sich zwei klare, sauber getrennte flüssige Phasen aus bildeten. Die obere Phase wurde abgetrennt und mit 6 g Natriumsulfat verrührt. Die erhaltene Mischung wurde 16 h stehen gelassen. Schließlich wurde das reine Produkt durch Filtration isoliert.
- Ausbeute: 195,6 g (94 %) farblose Flüssigkeit
- Säurezahl: < 0,1 mg KOH/g
- Natriumgehalt: 2870 ppm

### Beispiel 3 Herstellung von Tetraethyldiethylenglycolbisphosphat (nicht erfindungsgemäß)

In einem 1000-ml-Vierhalskolben mit Rührer, Thermometer, Tropftrichter mit Druckausgleich und Rückflusskühler wurden unter Stickstoffatmosphäre 390 ml Ethanol bei 20 °C vorgelegt. Bei dieser Temperatur wurden innerhalb von 55 min 186,9 g Diethylenglycol-bis(dichlorphosphat) aus Beispiel 1 zugetropft. Durch Außenkühlung wurde die Temperatur bei 20 °C gehalten. Die Reaktionsmischung wurde 4 h bei 20 °C nachgerührt. Dann wurde in die farblose und klare Syntheselösung innerhalb von 70 min 163,7 g 50%ige Natronlauge getropft. Die Temperatur wurde durch Kühlung im Eiswasserbad bei 20 °C gehalten. Die Mischung hatte pH 8,7 und wurde 16 h bei 23 °C gerührt und dann mittels einer Vigreux-Kolonne bei 60 °C und 130 mbar von nicht umgesetztem Ethanol befreit. Die verbleibende Suspension wurde mit 500 ml Wasser verdünnt und unter Rühren auf 60 °C erwärmt. Der Feststoff löste sich vollständig auf, allerdings war keine Phasentrennung zu beobachten. Eine Aufarbeitung über Flüssig-flüssig-Trennung war nicht möglich.

### Beispiel 4 Herstellung von Tetraethyldiethylenglycolbisphosphat (erfindungsgemäß)

In einem 1000-ml-Vierhalskolben mit Rührer, Thermometer, Tropftrichter mit Druckausgleich und Rückflusskühler wurden unter Stickstoffatmosphäre 350 ml Ethanol bei 20 °C vorgelegt. Bei dieser Temperatur wurden innerhalb von 35 min 169,8 g Diethylenglycol-bis(dichlorphosphat) aus Beispiel 1 zugetropft. Durch Außenkühlung wurde die Temperatur bei 20 °C gehalten. Die Reaktionsmischung wurde 4 h bei 20 °C nachgerührt. Dann wurde in die farblose und klare Syntheselösung innerhalb von 35 min 160,0 g 50%ige Natronlauge getropft. Die Temperatur wurde durch Kühlung im Eiswasserbad bei 20 °C gehalten. Die Mischung hatte pH 8,2 und wurde 16 h bei 23 °C gerührt und dann mittels einer Vigreux-Kolonne bei 90 °C und 473 mbar von nicht umgesetztem Ethanol befreit. Die verbleibende Suspension wurde 2 h bei 90 °C nachgerührt und dann mit 318 ml Wasser verdünnt. Der Feststoff löste sich vollständig auf und es bildeten sich zwei klare, sauber getrennte flüssige Phasen. Die obere Phase wurde abgetrennt und mit 6 g Natriumsulfat verrührt. Die erhaltene Mischung wurde 16 h stehen gelassen. Schließlich wurde das reine Produkt durch Filtration isoliert.
- Ausbeute: 168,6 g (89 %) farblose Flüssigkeit
- Säurezahl: < 0,1 mg KOH/g
- Natriumgehalt: 2547 ppm

### Beispiel 5 Herstellung von Tetraethyldiethylenglycolbisphosphat (erfindungsgemäß)

In einem 1000-ml-Vierhalskolben mit Rührer, Thermometer, Tropftrichter mit Druckausgleich und Rückflusskühler wurden unter Stickstoffatmosphäre 350 ml Ethanol bei 20 °C vorgelegt. Bei dieser Temperatur wurden innerhalb von 35 min 169,8 g Diethylenglycol-bis(dichlorphosphat) aus Beispiel 1 zugetropft. Durch Außenkühlung wurde die Temperatur bei 20 °C gehalten. Die Reaktionsmischung wurde 4 h bei 20 °C nachgerührt. Dann wurde in die farblose und klare Syntheselösung innerhalb von 10 min 318 ml Wasser getropft. Dabei wurde die Temperatur durch Kühlung im Eiswasserbad bei 20 °C gehalten. Anschließend wurden in 20 min 160,3 g 50%ige Natronlauge zugetropft. Die Temperatur wurde ebenfalls durch Kühlung im Eiswasserbad bei 20 °C gehalten. Die erhaltene Emulsion hatte pH 9,1 und trennte sich in zwei klare, flüssige Phasen ohne Feststoffanteil. Die organische Phase wurde abgetrennt und mittels einer Destillationsbrücke bei 77 °C und 311 mbar von nicht umgesetztem Ethanol befreit. Der Rückstand wurde nach dem Abkühlen filtriert.
- Ausbeute: 159,0 g (84 %) farblose Flüssigkeit
- Säurezahl: < 0,1 mg KOH/g
- Natriumgehalt: 2591 ppm

### Beispiel 6 Herstellung von Tetramethyldiethylenglycolbisphosphat (erfindungsgemäß)

Nach dem in Beispiel 4 angegebenen Verfahren wurde aus 250 ml Methanol und 169,8 g Diethylenglycol-bis(dichlorphosphat) aus Beispiel 1 Tetramethyldiethylenglycolbisphosphat hergestellt.
- Ausbeute: 132,4 g (82 %) farblose Flüssigkeit
- Säurezahl: < 0,1 mg KOH/g
- Natriumgehalt: 2034 ppm

### Beispiel 7 Löslichkeit von Tetraalkylbisphosphaten in Wasser (erfindungsgemäß)

50,0 g Tetraalkylbisphosphat und 50,0 g voll entsalztes Wasser wurden in einen Scheidetrichter eingewogen, kräftig geschüttelt und dann für 1 h stehen gelassen. Wenn sich eine Phasentrennung zeigte, wurde die untere, wässrige Phase sorgfältig abgetrennt und ausgewogen (m_{W}). Die wässrige Phase wurde unter Vakuum am Rotationsverdampfer bis zur Gewichtskonstanz eingeengt und der Rückstand wurde ebenfalls ausgewogen (m_{R}). Als Maß für die Löslichkeit in Wasser wurde die Größe m_{R}/m_{W} × 100 % berechnet und in Tabelle 1 aufgelistet.

Bei den Substanzen Tetramethyldiethylenglycolbisphosphat und Tetraethyldiethylenglycolbisphosphat fand im oben beschriebenen Versuch keine Phasentrennung statt. Weitere Versuche mit anderen Gewichtsverhälnissen von Tetraalkylbisphosphat und Wasser ergaben bei diesen Substanzen ebenfalls keine Phasentrennung. Das bedeutet, dass Tetramethyldiethylenglycolbisphosphat und Tetraethyldiethylenglycolbisphosphat vollständig wasserlöslich sind.

**Tabelle 1 Löslichkeit von Tetraalkylbisphosphaten in Wasser**

| **Tetraalkylbisphosphat** | **m_{R}/m_{W} × 100 %** |
|---|---|
| Tetraethyldiethylenglycolbisphosphat | Keine Phasentrennung |
| (Beispiele 2, 4 und 5) | |
| Tetramethyldiethylenglycolbisphosphat | Keine Phasentrennung |
| (Beispiel 6) | |

### Auswertung

Beispiel 7 zeigt, dass die betrachteten Tetraalkylbisphosphate ganz oder teilweise mit Wasser mischbar sind. Daher sind diese Substanzen nach den Herstellverfahren aus dem Stand der Technik nur in schlechter Ausbeute oder gar nicht herstellbar. Die Beispiele 2 und 4 bis 6 zeigen, dass Tetraalkylbisphosphate nach dem erfindungsgemäßen Verfahren einfach und in hoher Ausbeute hergestellt werden können. Dabei werden Produkte hoher Reinheit erhalten, wie sich an den niedrigen Säurezahlen und Natriumgehalten ablesen lässt. Überraschend ist, dass die Herstellung gerade bei vollständig wasserlöslichen Tetraalkylbisphosphaten erfolgreich möglich ist.

Voll entsalztes Wasser im Sinne der vorliegenden Erfindung ist gekennzeichnet, indem es eine Leitfähigkeit von 0,1 bis 10 µS besitzt, wobei der Gehalt an gelösten oder ungelösten Metall-ionen nicht größer als 1 ppm, bevorzugt nicht größer als 0,5 ppm für Fe, Co, Ni, Mo, Cr, Cu als individuelle Komponenten ist und nicht größer als 10 ppm, bevorzugt nicht größer als 1 ppm für die Summe der genannten Metalle ist.

## Patentansprüche

1. Verfahren zur Herstellung von vollständig wasserlöslichen Tetraalkylbisphosphaten, **dadurch gekennzeichnet, dass** man
a) ein Tetrachlorbisphosphat mit einem oder mehreren Alkoholen umsetzt,
b) wenn in Schritt a) mindestens 50 % der im Tetrachlorbisphosphat enthaltenen P-Cl-Gruppen umgesetzt wurden, die Reaktionsmischung aus Schritt a) mit einer Base enthaltend eine oder mehrere Substanzen der Formel (Katⁿ⁺)ₐ(X^{m-})_{b}, worin Katⁿ⁺ für ein Kation der Ladung n steht, X^{m-} für ein Anion der Ladung m steht, und a und b ganze Zahlen sind, die der Beziehung n × a = m × b genügen, umsetzt,
c) anschließend soviel Wasser zu der Reaktionsmischung aus Schritt b) zugibt, dass sich eine Mischung bestehend aus zwei getrennten, flüssige Phasen bildet und
d) die das Tetraalkylbisphosphat enthaltende Phase aus der in Schritt c) erhaltenen Mischung abtrennt.

2. Verfahren nach Anspruch 1, **dadurch gekennzeichnet, dass** es sich bei dem Tetrachlorbisphosphat um eine Substanz der allgemeinen Formel (I) 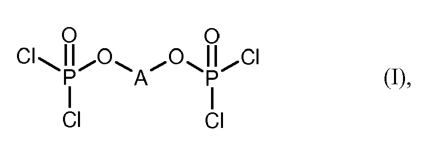 handelt, worin
A für einen geradkettigen, verzweigten und/oder cyclischen C₄- bis C₂₀-Alkylenrest, eine Gruppierung -CH₂-CH=CH-CH₂-, eine Gruppierung -CH₂-C≡C-CH₂-, eine Gruppierung -CHR⁵-CHR⁶-(O-CHR⁷-CHR⁸)ₐ-, worin a eine Zahl von 1 bis 5 ist, eine Gruppierung -CHR⁵-CHR⁶-S(O)_{b}-CHR⁷-CHR⁸-, worin b eine Zahl von 0 bis 2 ist, oder eine Gruppierung -(CHR⁵-CHR⁶)_{c}-O-R⁹-O-(CHR⁷-CHR⁸)_{d}-, worin c und d unabhängig voneinander Zahlen von 1 bis 5 sind, steht,
R⁵, R⁶, R⁷, R⁸ unabhängig voneinander für H oder Methyl stehen,
R⁹ für eine Gruppierung -CH₂-CH=CH-CH₂-, eine Gruppierung -CH₂-C≡C-CH₂-, einen 1,2-Phenylenrest, einen 1,3-Phenylenrest, einen 1,4-Phenylenrest, einen Rest der allgemeinen Formel (II), 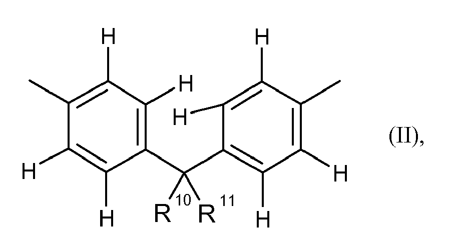
einen Rest der allgemeinen Formel (III), 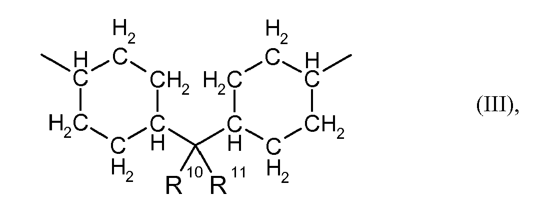 einen Rest der allgemeinen Formel (IV), 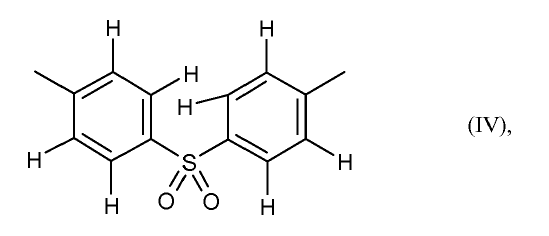 oder für einen Rest der Formel -C(=O)-R¹²C(=O)- steht,
R¹⁰ und R¹¹ unabhängig voneinander für H oder C₁- bis C₄-Alkyl stehen oder R¹⁰ und R¹¹ zusammen einen optional alkylsubstituierten Ring mit 4 bis 8 C-Atomen bilden und
R¹² für einen geradkettigen, verzweigten und/oder cyclischen C₂- bis C₈-Alkylenrest, einen 1,2-Phenylenrest, einen 1,3-Phenylenrest, oder einen 1,4-Phenylenrest steht.

3. Verfahren nach Anspruch 2, **dadurch gekennzeichnet, dass** A ein geradkettiger C₄- bis C₆-Alkylenrest, eine Gruppierung der allgemeinen Formel (III), worin R¹⁰ und R¹¹ gleich sind und Methyl bedeuten, eine Gruppierung der Formeln (V), (VI) oder (VII), 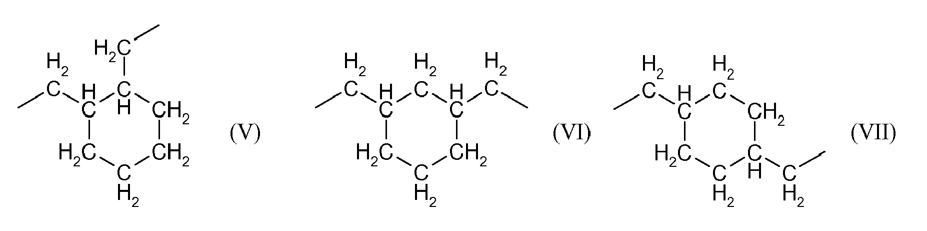 eine Gruppierung -CHR⁵-CHR⁶-(O-CHR⁷-CHR⁸)ₐ-, worin a eine Zahl von 1 bis 2 ist und R⁵, R⁶, R⁷ und R⁸ gleich sind und H bedeuten, oder eine Gruppierung -(CHR⁵-CHR⁶)_{c}-O-R⁹-O-(CHR⁷-CHR⁸)_{d}-, worin c und d unabhängig voneinander eine Zahl von 1 bis 2 sind, R⁹ eine Gruppierung der allgemeinen Formel (II) und R¹⁰ und R¹¹ gleich sind und Methyl bedeuten.

4. Verfahren nach Anspruch 2, **dadurch gekennzeichnet, dass** A einen Rest bedeutet ausgewählt aus der Gruppe bestehend aus -CH₂CH₂-O-CH₂CH₂-, -CH₂CH₂CH₂CH₂- und -CH₂-CH(CH₂CH₂)₂CH-CH₂-.

5. Verfahren nach Anspruch 1, **dadurch gekennzeichnet, dass** der Alkohol oder die Alkohole ausgewählt werden aus der Gruppe bestehend aus Methanol, Ethanol, 1-Propanol, 2-Propanol, 2-Methyl-1-propanol, 1-Butanol und 2-Butanol.

6. Verfahren nach Anspruch 1, **dadurch gekennzeichnet, dass** der Alkohol oder die Alkohole ausgewählt werden aus der Gruppe bestehend aus Methanol und Ethanol.

7. Verfahren nach Anspruch 1, **dadurch gekennzeichnet, dass** Katⁿ⁺ für ein optional substituiertes Ammoniumion, ein Alkalimetallion oder ein Erdalkalimetallion und X^{m-} für Hydroxid, Alkoholat, Oxid, Carbonat, Hydrogencarbonat, Phosphat, Hydrogenphosphat, Dihydrogenphosphat oder Acetat steht.

8. Verfahren nach Anspruch 1, **dadurch gekennzeichnet, dass** die Menge der Base so gewählt wird, dass die Reaktionsmischung nach dem Schritt b) einen pH-Wert zwischen 6 und 11 aufweist.

9. Verfahren nach Anspruch 1, **dadurch gekennzeichnet, dass** die Base in Form einer wässrigen Lösung oder Dispersion eingesetzt wird.

10. Verfahren nach Anspruch 9, **dadurch gekennzeichnet, dass** als Base eine 10 - 60 Gew.-%ige, wässrige Lösung von Natriumhydroxid, Natriumcarbonat, Kaliumhydroxid und/oder Kaliumcarbonat eingesetzt wird.

11. Verfahren nach Anspruch 1, **dadurch gekennzeichnet, dass** die Base in Form eines Pulvers mit einer mittleren Teilchengröße von 0,1 µm bis 2000 µm eingesetzt wird

12. Verfahren nach Anspruch 11, **dadurch gekennzeichnet, dass** als Base pulverförmiges Natriumcarbonat, Natriumhydrogencarbonat, Kaliumcarbonat und/oder Kaliumhydrogencarbonat eingesetzt wird.

13. Verfahren nach Anspruch 1, **dadurch gekennzeichnet, dass** mindestens einer der Schritte a) bis e) diskontinuierlich durchgeführt wird.

14. Verfahren nach Anspruch 1, **dadurch gekennzeichnet, dass** mindestens einer der Schritte a) bis e) kontinuierlich durchgeführt wird.

15. Verfahren nach Anspruch 1, **dadurch gekennzeichnet, dass** die in Schritt c) eingesetzt Menge Wasser zwischen 25 und 50 mol bezogen auf ein mol Tetrachlorbisphosphat beträgt.
